# EUROPEAN PATENT APPLICATION

(11) **EP 2 375 073 A1**
(43) Date of publication of application: **12.10.2011**
(21) Application number: 10158810.1
(22) Date of filing: 31.03.2010
(51) Int. Cl.: F04C 15/00, F04C 14/22

(54) **Sealing for the control chamber of a variable displacement lubricant pump**

(71) Applicant: Pierburg Pump Technology GmbH, 41460 Neuss (DE)
(72) Inventor: Fiorini, Stefano, 561124 Pisa (IT); Righetti, Daniele, 57128 Livorno (IT)
(74) Representative: Ter Smitten, Hans

(57) **Abstract**

The present invention refers to a Variable displacement lubricant pump 10 for an internal combustion engine. The variable displacement lubricant pump 10 is provided with a housing 12 and a shiftable and basically circular control ring 14 inside the housing 12. A seal 16 is sealing a control chamber 20, 22 which is defined by the housing 12 and the control ring 14. With the control chamber 20, 22 the position of the control ring 14 is controlled. The control ring 14 pivots at a pivot axis 26 so that the control ring 14 is shifted between a low and a high pump chamber volume position. The seal 16 is provided with a stiff bar 17 and an elastomeric stripe 18 fixed to the stiff bar 17, whereby the stiff bar 17 is sliding at an inner surface of the housing 12 and whereby the elastomeric stripe 17 is attached to the outer surface of the control ring 14.

## Description

The present invention refers to a variable displacement lubricant pump for an internal combustion engine. The pump is provided with a housing, a shiftable control ring inside the housing, and a seal sealing a control chamber defined by the housing and the control ring.

Variable displacement lubricant pumps of the prior art are known from US 6 375 435 B2. These pumps comprise a housing, a shiftable control ring inside the housing, and a seal which is sealing a first pressure zone in the control chamber from a second pressure zone. The plastic seal bar is seated in a respective slot and is biased radially towards the control ring by a spring which is positioned in the slot so that the seal is permanently in contact with the outer surface of the control ring. During operation of the pump, the plastic seal is permanently in transversal motion and in contact with the control ring and the slot wall so that an abrasion of the seal cannot be avoided and can lead to a leakage. As a consequence the accuracy of the lubricant pressure controlled by the pump, decreases. The spring causes also a pretensioning of the plastic seal bar, whereby the spring acts at certain points, i.e. the points where the spring is seating. As a consequence, the pretension force distribution is not equal over the length of the plastic seal bar. In addition, the assembly of such a pump with a seal which is supported by a spring is not cost-efficient.

It is an object of the present invention to provide a variable displacement lubricant pump with improved pressure control quality.

This object is solved with a variable displacement lubricant pump with the features of claim 1.

The variable displacement lubricant pump is provided with a housing and a shiftable and basically circular control ring inside the housing. A seal is sealing a control chamber which is defined by the housing and the control ring. With the control chamber the position of the control ring is controlled. The control ring pivots at a pivot axis so that the control ring is shifted between a low and a high pump chamber volume position. The seal is provided with a stiff bar and an elastomeric stripe fixed to the stiff bar, whereby the stiff bar is sliding at an inner surface of the housing and whereby the elastomeric stripe is attached to the outer surface of the control ring. This wording includes the inverse arrangement, i.e. the stiff bar is sliding at an outer surface of the control ring and the elastomeric stripe being attached to the inner surface of the housing.

The elastomeric stripe of the seal provides a radial pretensioning of the stiff bar with a homogenous longitudinally force distribution so that the force which pushes the stiff bar against the inner surface of the housing ring is the same at every point of the stiff bar. Therefore, the pump provides an improved pressure control quality.

Preferably, the stiff bar is a plastic bar, wherein the stiff plastic bar is made out of a thermoplastic elastomer, thermoplastic and/or thermosetting plastic. Plastic materials have many desirable technical properties like hardness, elasticity, heat resistance and chemical resistance, for instance, which are adaptable in a broad range.

According to a preferred embodiment the stiff bar is a metal bar and the metal bar is made out of steel. A contact between the stiff metal bar and the metal housing wall provides a good sealing property. In addition, the abrasion of the stiff metal bar is reduced significantly so that the seal provides a good long time durability. Furthermore, steel is an alloy with numerous advantages properties depending on the composition of the steel. The metal bar steel should have an optimal ratio of ductility and stiffness, and good sliding and abrasion properties.

Preferably, the elastomeric stripe is co-molded to the sliding stiff bar. The co-molding of the elastomeric part and the stiff part provides a one-piece seal which is fluid-tight, strong enough to withstand the wear of the relative motion and which simplifies the mounting procedure,

Preferably, the elastomeric stripe is form-fitted hold in a corresponding slot of the control ring (or of the housing). In cross-section, the elastomeric stripe is provided with parallel longitudinal side walls and is preferably rectangular. The elastomeric stripe is arranged in a form-fitted slot of the control ring (or of the housing). This embodiment provides a reliable fixation of the elastomeric stripe at the control ring (or at the housing) and simplifies the mounting procedure of the pump because the seal can be mounted to the slot with a single mounting step.

The following is a detailed description of an embodiment of the invention with reference to the drawings, in which:
Figure 1 shows a variable displacement lubricant pump from the plan view, and

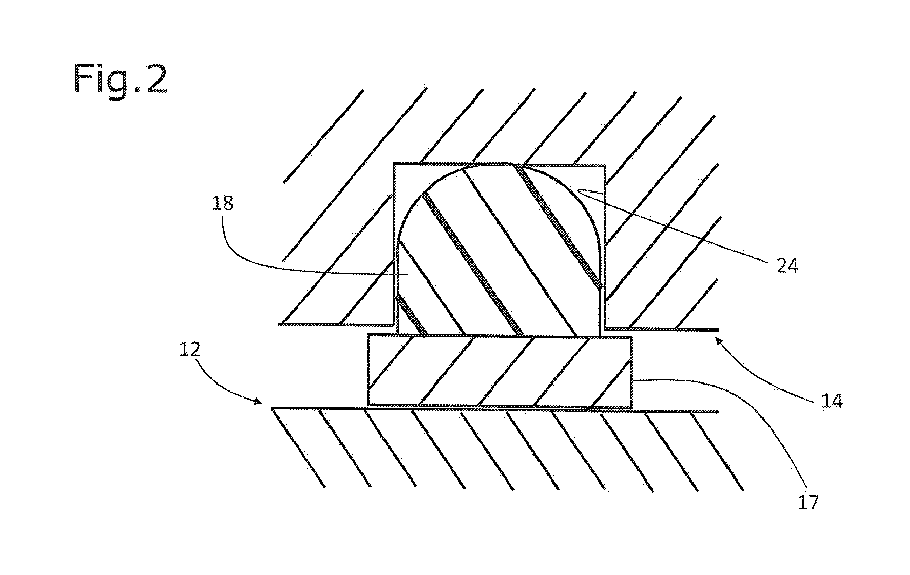

Figure 2 shows a seal, whereby the seal comprise a metal bar and an elastomeric stripe.

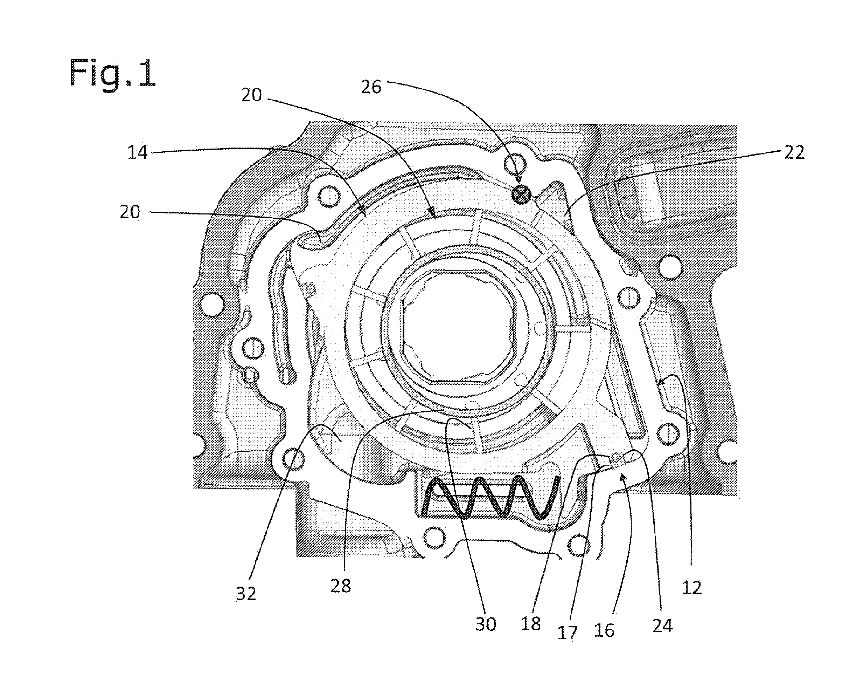

In figure 1, a variable displacement lubricant pump 10 for an internal combustion engine is shown. The lubricant pump 10 is for supplying an internal combustion engine with a lubricant, and more particularly, with lubricant with a constant pressure.

The variable displacement lubricant pump 10 comprises a metal housing 12 in which a shiftable control ring 14 is arranged axially between two side walls (not shown). The control ring 14 is provided with a pivot axis 26 at which the control ring 14 pivots, so that the control ring 14 is shifted between a low and a high pump chamber volume position.

The metal housing 12 contains a rotor ring 28 with numerous radially slideable vanes 30, whereby the slidable vanes 30 are rotating inside the shiftable control ring 14. The control ring 14 surrounds a few pump chamber sections separated by the vanes 30. The rotor ring 28 is provided with a protrusion (not shown) which protrudes axially to the outside of one of the side walls. The protrusion of the rotor ring 28 can be rotated by a pump actuator which is not shown.

The variable displacement lubricant pump 10 comprises two control chambers 20, 22 which are formed by the housing 12 and the control ring 14, respectively. The control chambers 20, 22 are opposed to each other with respect to the pivot axis 26 of the control ring 14. Both control chambers 20, 22 provide different pressures with respect to a third chamber 32 under atmospheric pressure. The control chambers 20, 22 are sealed by seals 16 against the third chamber 32. The seals 16 are form-fitted hold in respective axial slots 24 of the control ring 14.

The seals 16 comprise a stiff bar 17 and an elastomeric stripe 18 which is preferably made out of a lubricant inert plastic. The elastomeric stripe 18 is co-molded to the sliding stiff bar 17. The co-molding can be realized by an adhesive or by any other means and methods known to an expert which lead to a strong and fluid-tight connection. The slots 24 or the seals 16, respectively are positioned so that the stiff bar 17 of the seal 16 is parallel and vis-à-vis to the pivot axis 26 of the control ring 14. The seal 16 is moving on a constant radius with respect to the pivot axis 26, when the control ring 14 is shifted.

With respect to the mounting of the seal, the variable displacement lubricant pump 10 is assembled first by inserting the seals 16 into the corresponding slots 24 of the control ring 14. After that, the control ring 14 is mounted to the housing 12 of the pump 10, thereby compressing the elastomeric stripe 18 of the seal 16.

## Claims

1. Variable displacement lubricant pump (10) with a housing (12), a shiftable control ring (14) inside the housing (12), and a seal (16) sealing a control chamber (20, 22) defined by the housing (12) and the control ring (14),
**characterized by**
the seal (16) comprising a stiff bar (17) and an elastomeric stripe (18) fixed to the stiff bar (17), whereby the stiff bar (17) is sliding at the housing (12) and whereby the elastomeric stripe (18) of the seal (16) is attached to the control ring (14).

2. Variable displacement lubricant pump (10) of claim 1, wherein the stiff bar (17) is a plastic bar.

3. Variable displacement lubricant pump (10) of claim 1, wherein the stiff bar (17) is a metal bar.

4. Variable displacement lubricant pump of claim 2, wherein the stiff plastic bar is made out of a thermoplastic elastomer, thermoplastic and/or a thermosetting plastic.

5. Variable displacement lubricant pump of claim 2, wherein the stiff metal bar is made out of steel.

6. Variable displacement lubricant pump (10) of one of the preceding claims, wherein the elastomeric stripe (18) is co-molded to the sliding stiff bar (17).

7. Variable displacement lubricant pump (10) of one of the preceding claims, wherein the elastomeric stripe (18) is form-fitted hold in a slot (24) of the control ring (14) or of the housing (12).
